# EUROPEAN PATENT APPLICATION

(11) **EP 4 701 245 A1**
(43) Date of publication of application: **25.02.2026**
(21) Application number: 24860051.2
(22) Date of filing: 20.05.2024
(51) Int. Cl.: H04W 4/80, H04N 21/436, H04N 21/4363, A63F 13/235, A63F 13/24, H04W 76/14, H04W 84/12, H04W 88/06

(54) **ELECTRONIC DEVICE AND OPERATION METHOD OF ELECTRONIC DEVICE**

(30) Priority: 25.08.2023 KR 20230112253; 12.10.2023 KR 20230136080
(71) Applicant: Samsung Electronics Co., Ltd., Suwon-si, Gyeonggi-do 16677 (KR)
(72) Inventor: SEO, Jehwan, Suwon-si, Gyeonggi-do 16677 (KR); KIM, Chulju, Suwon-si, Gyeonggi-do 16677 (KR)
(74) Representative: Appleyard Lees IP LLP
(86) International application number: PCT/KR2024/006757
(87) International publication number: WO 2025/048125

(57) **Abstract**

A display device according to an embodiment of the present disclosure may comprise: a first communication unit for communicating on the basis of a first wireless communication technology; a second communication unit for communicating on the basis of a second wireless communication technology; and a processor connected to the first communication unit and the second communication unit. The display device may be configured to: receive, through the first communication unit, first image data from a first electronic device for transmitting data received from a source device; receive a connection request from a remote control device for transmitting input information of the source device, through the second communication unit; perform pairing between the display device and the remote control device in response to receiving the connection request; and transmit information on the pairing between the display device and the remote control device to the first electronic device through the first communication unit. The first electronic device and the display device may be connected to the same network.

## Description

### [Technical Field]

Embodiments of the disclosure relate to an electronic device and a method for operating the electronic device.

### [Background Art]

With the development of Internet of Things (IoT) technology, IoT devices (e.g., smart TV, wireless image transmission/reception device, game console, etc.) may be connected to each other and connected by a remote control device (e.g., a smartphone or a remote controller). IoT devices may be wiredly connected but may also perform data communication using short-range wireless communication technologies, such as Wi-Fi and Bluetooth. As technology for wireless connection between IoT devices continues to develop, a device may not be relegated to a fixed position but repositioned according to the user's command. Further, with various types of an external devices (e.g., set-top box, high-definition multimedia interface (HDMI) device, or game console) capable of establishing connection to a display device (e.g., a TV), a wireless image transmission/reception device may be used to easily connect external devices with a display device.

### [Disclosure of Invention]

### [Technical Problem]

If communication between a remote control device (e.g., a game pad) and a source device (e.g., a game console) is not stable or unreliable due to, e.g., the user's movement, data transmission (e.g., information transfer) regarding a user input generated by the remote control device to the source device may be challenging and difficult.

Based on the foregoing discussions, the disclosure provides a device and method for performing data communication between the remote control device and the source device through various paths, as well as a wireless communication link formed between the remote control device and the source device.

Further, the disclosure provides a device and method for adaptively selecting a path for transferring information (e.g., transmitting data) regarding a user input generated from a remote control device, according to the user's position (e.g., location).

### [Solution to Problem]

A display device according to an embodiment of the disclosure may include a first communication unit performing communication based on a first wireless communication technology; a second communication unit performing communication based on a second wireless communication technology; and a processor connected to the first communication unit and the second communication unit, wherein the processor is configured to: receive, from a first electronic device through the first communication unit, first image data for transmitting data received from a source device; receive, from a remote control device through the second communication unit, a connection request for transmitting input information of the source device; in response to receiving the connection request, perform pairing operation of the display device with the remote control device, and transmit pairing information of the display device and the remote control device to the first electronic device through the first communication unit, wherein the first electronic device and the display device are connected to a same network.

A method for operating a display device according to an embodiment of the disclosure may include receiving, from a first electronic device using a first wireless communication technology, first image data for transmitting data received from a source device; receiving, from a remote control device using a second wireless communication technology, a connection request for transmitting input information of the source device; performing pairing of the display device with the remote control device in response to receiving the connection request; and transmitting, to the first electronic device using the first wireless communication technology, pairing information of the display device and the remote control device, wherein the first electronic device and the display device are connected to a same network. A method for operating a remote control device according to an embodiment of the disclosure may include performing data communication with a source device using a first short-range wireless communication technology; transmitting a connection request to a display device in response to identifying that connection of the remote control device with the source device is released; forming a wireless communication link between the remote control device and the display device using the first short-range wireless communication technology; and transmitting, to the display device through the wireless communication link, information regarding a user input to the remote control device.

### [Advantageous Effects of Invention]

Embodiment of the disclosure may transmit information regarding a user input to a source device even when connection between a remote control device and the source device is released due to, e.g., the user's movement.

Effects of the disclosure are not limited to the foregoing, and other unmentioned effects would be apparent to one of ordinary skill in the art from the following description.

### [Brief Description of Drawings]

The above and other aspects, features, and advantages of certain embodiments of the disclosure will be more apparent from the following description taken in conjunction with the accompanying drawings, in which:
FIG. 1 is a block diagram illustrating an example configuration of an electronic device according to various embodiments;
FIG. 2 illustrates an example IoT environment including a display device according to various embodiments;
FIG. 3 is a block diagram illustrating an example configuration of a display device, a source device, a remote control device, and a wireless image transmission/reception device according to various embodiments;
FIG. 4 illustrates an example connection of a remote control device based on a movement of the remote control device according to various embodiments;
FIG. 5 illustrates an example process of pairing according to various embodiments; and
FIG. 6 illustrates an example flow diagram among a remote control device, a source device, a first electronic device, and a display device according to various embodiments.

The same or similar reference denotations may be used to refer to the same or similar elements throughout the specification and the drawings.

### [Mode for the Invention]

Embodiments of the disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

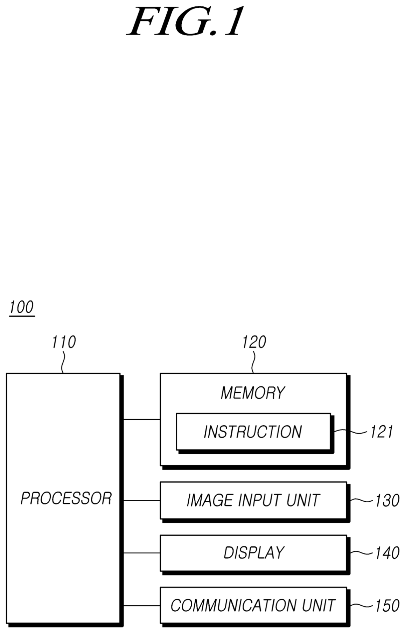

FIG. 1 is a block diagram illustrating an example configuration of an electronic device according to various embodiments; The electronic device 100 may be wearable terminals, such as watches and glasses, capable of performing various computing functions, such as video watching and communication. The electronic device 100 may be various types of terminals, including various circuitry, without being limited to the above examples.

According to an embodiment, the memory 120 is a storage medium used by the electronic device 100 and may store data, such as at least one command 121 or configuration information corresponding to at least one program. The program may include an operating system program and various application programs.

In an embodiment, the memory 120 may store pairing information about an external electronic device located adjacent to the electronic device 100. In an embodiment, the pairing information may include, e.g., device information about the external electronic device, information about another external electronic device or remote control device paired with the external electronic device, information about a scheme (e.g., Bluetooth or Wi-Fi) in which the external electronic device and the other external electronic device or remote control device are paired with each other, and information about a pairing history between the external electronic device and the other external electronic device or remote control device.

In an embodiment, the memory 120 may include at least one type of storage medium of flash memory types, hard disk types, multimedia card micro types, card types of memories (e.g., secure digital or eXtreme digital memory cards), random access memories (RAMs), static random access memoriesr, read-only memories (ROMs), electrically erasable programmable read-only memories, programmable read-only memories, magnetic memories, magnetic disks, or optical discs.

According to an embodiment, the image input unit 130, including various circuitry, may receive images and image information through a tuner, an input/output unit, or the communication unit 150, including various circuitry. In an embodiment, the communication unit 150 may be implemented in hardware as a processor. The image input unit 130 may include at least one of the tuner and the input/output unit. The tuner may tune and select only the frequency of the broadcast channel to be received by the electronic device 100 among many radio components, by amplifying, mixing, and resonating the broadcast signals wiredly and/or wirelessly received. The broadcast signal may include video, audio, and additional data (e.g., electronic program guide). The tuner may receive real-time broadcast channels (or real-time viewing images) from various broadcast sources, such as terrestrial broadcasts, cable broadcasts, satellite broadcasts, Internet broadcasts, and the like. The tuner may be implemented integrally with the electronic device 100 or may be implemented as a separate tuner electrically connected to the electronic device 100. The input/output unit may include at least one of a HDMI input port, a component input jack, a personal computer (PC) input port, and a universal serial bus input jack capable of receiving an image and image information from an external device of the electronic device 100 under the control of the processor 110. It is obvious to one of ordinary skill in the art that the input/output unit may be added, deleted, and/or changed according to the performance and structure of the electronic device 100.

According to an embodiment, the display 140 may perform functions for outputting information in the form of numbers, characters, images, and/or graphics. The display 140 may include at least one hardware module for output. The at least one hardware module may include at least one of, e.g., a liquid crystal display, a light emitting diode, a light emitting polymer display, an organic light emitting diode, an active matrix organic light emitting diode, or flexible LED. The display 140 may display a screen corresponding to data received from the processor 110. The display 140 may be referred to as an 'output unit', a 'display unit', or by other terms having an equivalent technical meaning. "Screen" may include an image displayed on the display of the electronic device. "Image" may be referred to as a frame. Various types of objects, such as icons, text, photos, videos, widgets, etc. may be displayed on the screen.

According to an embodiment, the communication unit 150 may provide a wired/wireless communication interface enabling communication with an external device. The communication unit 150 may include at least one of a wired Ethernet, a wireless LAN communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 110. An AP may include a device for connecting devices by related standards using Wi-Fi in a computer network. The short-range communication unit may perform short-range communication wirelessly with an external device under the control of the processor 110. Short-range communication may include Bluetooth, Bluetooth low energy, infrared data association, ultra-wideband, and near-field communication. The external device may include a server device and a mobile terminal (e.g., phone, tablet, etc.) providing, e.g., a video service.

According to an embodiment, the processor 110, including various circuitry, may control at least one other component of the electronic device 100 and/or execute computation or data processing regarding communication by executing at least one command 121 stored in the memory 120. The processor 110 may include at least one of a central processing unit (CPU), a graphic processing unit, a micro controller unit, a sensor hub, a supplementary processor, a communication processor, an application processor, an application specific integrated circuit, or field programmable gate arrays and may have multiple cores.

In an embodiment, the processor 110 may execute, e.g., software to control at least one other component (e.g., a hardware or software component) of the electronic device 100 connected with the processor 110 and may process or compute various data. According to an embodiment, as at least part of the data processing or computation, the processor 110 may store a command or data received from another component onto a volatile memory, process the command or the data stored in the volatile memory, and store resulting data in a non-volatile memory. According to an embodiment, the processor 110 may include a main processor (e.g., a CPU or an AP), or an auxiliary processor (e.g., a graphics processing unit, a neural processing unit, an image signal processor, a sensor hub processor, or a communication processor) that is operable independently from, or in conjunction with, the main processor. For example, when the electronic device 100 includes the main processor and the auxiliary processor, the auxiliary processor may be configured to use lower power than the main processor or to be specified for a designated function. The auxiliary processor may be implemented separately from, or as part of, the main processor.

In an embodiment, the processor may obtain image frame data from at least one of the memory 120, the image input unit 130, or the communication unit 150. The processor may receive image frame data from at least one of the memory 120, the image input unit 130, or the communication unit 150. The image frame data may include data regarding a frame constituting an image. For example, the image frame data may be identified from the memory 120 (e.g., an image recorded and stored). For example, the image frame data may include data obtained from the communication unit 150 or the image input unit 130 (e.g., real-time streaming image).

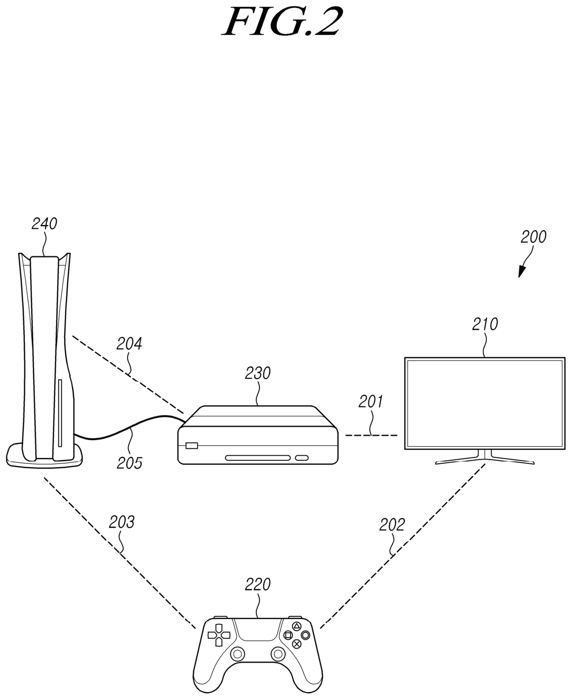

FIG. 2 illustrates an example IoT environment including a display device according to various embodiments. The display device 210 of FIG. 2 may be a device corresponding to the electronic device 100 of FIG. 1.

In an embodiment, the IoT environment 200 may include a display device 210, a remote control device 220, a wireless image transmission/reception device 230, and a source device 240 - each including various circuitry.

In an embodiment, the display device 210 may include a device corresponding to the electronic device 100 of FIG. 1.

In an embodiment, the display device 210 may display a screen, based on data received from the source device 240 through the wireless image transmission/reception device 230. The display device 210 may display data about graphics of a game received from the source device 240. The remote control device 220 may include processing circuitry and may be used to control or effect changes the graphic (e.g., contents, objects, or images) displayed on the screen of the display device 210.

In an embodiment, the remote control device 220 may include a device for remotely controlling the display device 210 and the source device 240. For example, the remote control device 220 may include a remote controller and a game pad device.

In an embodiment, the remote control device 220 may include a plurality of physical objects (e.g., buttons, touch pads, joysticks, etc.) for receiving a user input. For example, the remote control device 220 may include an object (e.g., power on, power off, object selection, volume adjustment) for controlling the objects or graphic displayed on the screen of the source device 240 and the display device 210, and an object (e.g., direction adjustment, icon selection, etc.) for controlling a game graphic screen.

In an embodiment, a control signal generated based on a user input to the remote control device 220 may be transmitted to the game source device. The remote control device 220 may transmit a control signal to the source device 240 through a wireless communication link 203 with the source device 240.

In an embodiment, a control signal, generated based on a user input to the remote control device 220, may be transmitted to the display device 210. The remote control device 220 may transmit a control signal to the display device 210 through the wireless communication link 202 with the display device.

In an embodiment, the wireless image transmission/reception device 230 may include transceiver circuitry and may connect the source device 240 and the display device 210. Referring to FIG. 2, the wireless image transmission/reception device 230 may be connected to the source device 240 via wired connection 205 or wireless connection 204. For example, the wireless image transmission/reception device 230 may be connected to the source device 240 through a HDMI connection unit. For example, the wireless image transmission/reception device 230 may be wirelessly connected (201) to the display device 210.

In an embodiment, although not illustrated, the wireless image transmission/reception device 230 may be connected to a device (e.g., a set-top box or an HDMI device) for transmitting an input source other than the source device 240 such as a game console. The wireless image transmission/reception device 230 may simplify connectivity among a plurality of media source devices and the display device that may be included in the IoT environment 200.

In an embodiment, the source device 240 may include a device for executing game software and processing game data.

In an embodiment, the source device 240 may include communication and processing circuitry and receive a control signal from the remote control device 220. The source device 240 may identify a user command based on the control signal received from the remote control device 220 and control an interaction in the game. For example, the user may manipulate the remote control device 220 to move a character in the game screen or perform a task in the game. The control signal generated by the manipulation of the user may be transmitted to the source device 240, and the source device 240 may transmit data regarding the screen to be displayed in the game to the display device 210 through the wireless image transmission/reception device 230 based on the received control signal.

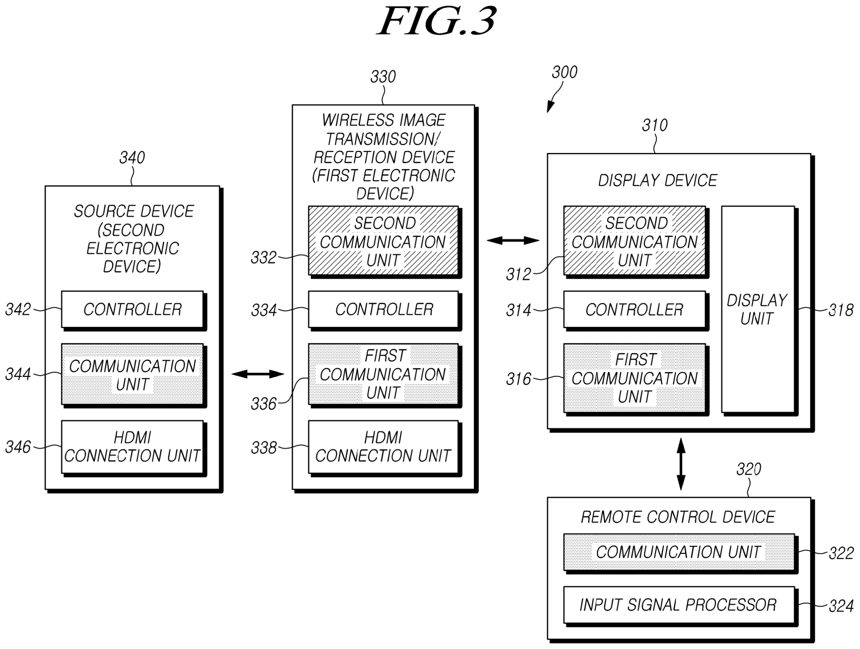

FIG. 3 is a block diagram 300 illustrating an example configuration of a display device, a source device, a remote control device, and a wireless image transmission/reception device according to various embodiments. The display device 310 of FIG. 3 may include a device corresponding to the display device 210 of FIG. 2. The wireless image transmission/reception device 330 of FIG. 3 may include a device corresponding to the wireless image transmission/reception device 230 of FIG. 2. The remote control device 320 of FIG. 3 may include a device corresponding to the remote control device 220 of FIG. 2. The source device 340 of FIG. 3 may include a device corresponding to the source device 240 of FIG. 2.

According to an embodiment, the display device 310 may include a first communication unit 316, a second communication unit 312, a controller 314, and a display unit 318 - each include various circuitry.

In an embodiment, the first communication unit 316 may include communication circuitry and communicate with the first communication unit 336 of the wireless image transmission/reception device 330 using a first short-range wireless communication technology and may be implemented in hardware using a processor. The first short-rage wireless communication technology may include Wi-Fi and Wi-Fi Direct.

In an embodiment, the second communication unit 312 may include communication circuitry and may communicate with the second communication unit 332 of the wireless image transmission/reception device 330 using a second short-range wireless communication technology and may be implemented in hardware using a processor. The second short-range wireless communication technology may include Bluetooth.

In an embodiment, the controller 314 may include processing circuitry and control the first communication unit 316, the second communication unit 312, and the display unit 318.

In an embodiment, the display unit 318 may display a screen of the display device 310.

According to an embodiment, the remote control device 320 may include a communication unit 322 and an input signal processor 324.

In an embodiment, the communication unit 322 may include communication circuitry and communicate with the first communication unit 316 of the display device 310 and the communication unit 344 of the source device 340 using the first short-range wireless communication technology.

In an embodiment, the communication unit 322 may transmit a control signal generated by the remote control device 320 to the source device 340 and the display device 310.

In an embodiment, the input signal processor 324 may include processing circuity and generate a control signal based on a user input to the remote control device 320.

According to an embodiment, the wireless image transmission/reception device 330 may include a second communication unit 332, a controller 334, a first communication unit 336, and an HDMI connection unit 338.

In an embodiment, the second communication unit 332 may include communication circuitry and communicate with the second communication unit 312 of the display device 310. The second communication unit 332 may perform communication using the second short-range wireless communication technology.

In an embodiment, the first communication unit 336 may include communication circuitry and communicate with the communication unit 344 of the source device. The first communication unit 336 may perform communication using the first short-range wireless communication technology.

In an embodiment, the controller 334 may include processing circuitry and control the second communication unit 332 and the first communication unit 336.

In an embodiment, the wireless image transmission/reception device 330 may include transceiver circuitry and be connected to the HDMI connection unit 346 of the source device 340 through the HDMI connection unit 338.

According to an embodiment, the source device 340 may include communication and processing circuitry and include a controller 342, a communication unit 344, and an HDMI connection unit 346.

In an embodiment, the communication unit 344 may perform data communication (e.g., transmit/receive data) with the first communication unit 336 of the wireless image transmission/reception device 330 and the communication unit 322 of the remote control device 320.

In an embodiment, the communication unit 344 may include communication circuitry and transmit and receive data to and from the wireless image transmission/reception device 330 and the remote control device 320 using the first short-range wireless communication technology.

In an embodiment, the controller 342 may include processing circuitry and control the communication unit 344.

In an embodiment, it may be connected to the HDMI connection unit 338 of the wireless image transmission/reception device 330 through the HDMI connection unit 346.

In an embodiment, the connection between the HDMI connection unit 346 and the HDMI connection unit 338 may include the wired connection of FIG. 2.

In an embodiment, the connection between the communication unit 344 and the first communication unit 336, i.e., a wireless communication link formed through the communication unit 344 and the first communication unit 336, may include the wireless connection 204 of FIG. 2.

In an embodiment, the connection between the second communication unit 332 and the second communication unit 312, i.e., a wireless communication link formed through the second communication unit 332 and the second communication unit 312 may include the wireless connection 201 of FIG. 2.

In an embodiment, a connection between the communication unit 344 and the communication unit 322, i.e., a wireless communication link formed through the communication unit 344 and the communication unit 322, may include the wireless connection 203 of FIG. 2.

In an embodiment, the connection between the communication unit 322 and the first communication unit 316, i.e., a wireless communication link formed through the communication unit 322 and the first communication unit 316, may include the wireless connection 204 of FIG. 2.

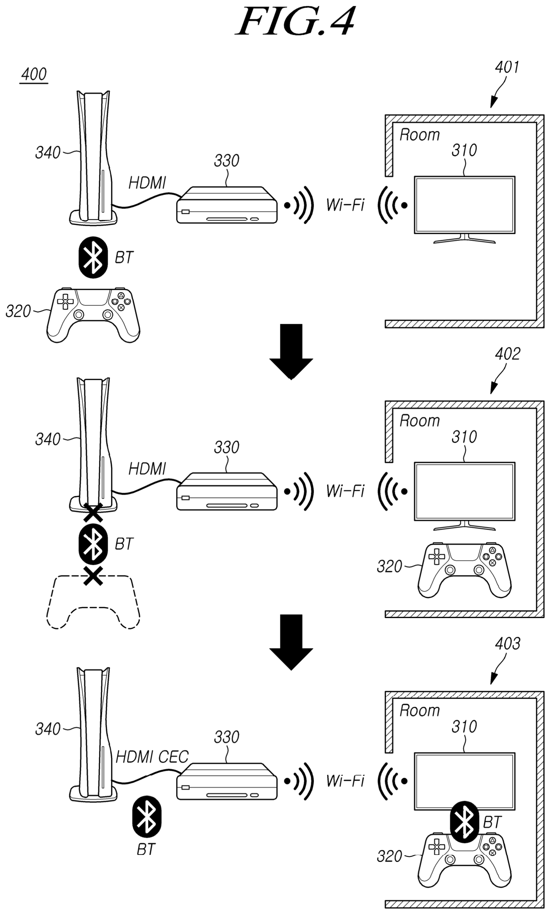

FIG. 4 illustrates an example connection 400 of a remote control device based on a movement of the remote control device according to various embodiments.

Referring to FIG. 4, the remote control device 320 is a device manipulated by the user, and the position of the remote control device 320 may also change correspondingly with the movement of the user.

In an embodiment, a first state 401 may include a state in which the remote control device 320 is connected to the source device 340 so that the remote control device 320 transmits a control signal to the source device 340.

In an embodiment, a wireless communication link may be established between the remote control device 320 and the source device 340. For example, the remote control device 320 and the source device 340 may be Bluetooth paired.

In an embodiment, the source device 340 may include communication and processing circuitry and generate screen data including information about a screen to be displayed on the display device 310 based on a control signal received from the remote control device 320.

In an embodiment, the source device 340 may transmit the generated screen data to the display device 310 through the wireless image transmission/reception device 330.

In an embodiment, a second state 402 may include a state in which the connection between the remote control device 320 and the source device 340 is released (e.g., disconnected). As the user of the remote control device 320 moves (e.g., moves to the room having the display device 310), the connection between the remote control device 320 and the source device 340 may be released (e.g., disconnected) due to an obstacle (e.g., a wall, another user, or an object) between the source device 340 and the remote control device 320. In the second state 402, it may be difficult for the source device 340 to further receive a control signal from the remote control device 320.

In an embodiment, the third state 403 may include a state in which a wireless communication link is established between the remote control device 320 and the display device 310. As a result of severed or lost connection due to an obstacle, for example, between the remote control device 320 and the source device 340, the remote control device 320 may transmit a control signal to the source device 340 through the display device 310 and the wireless image transmission/reception device 330.

In an embodiment, in response to identifying (or being notified) that connection with the source device 340 is released (e.g., lost or severed), the remote control device 320 may search for another connectable device. As a result of the search for another connectable device, remote control device 320 may establish connection with the display device 310. For example, the remote control device 320 may perform pairing with the display device 310.

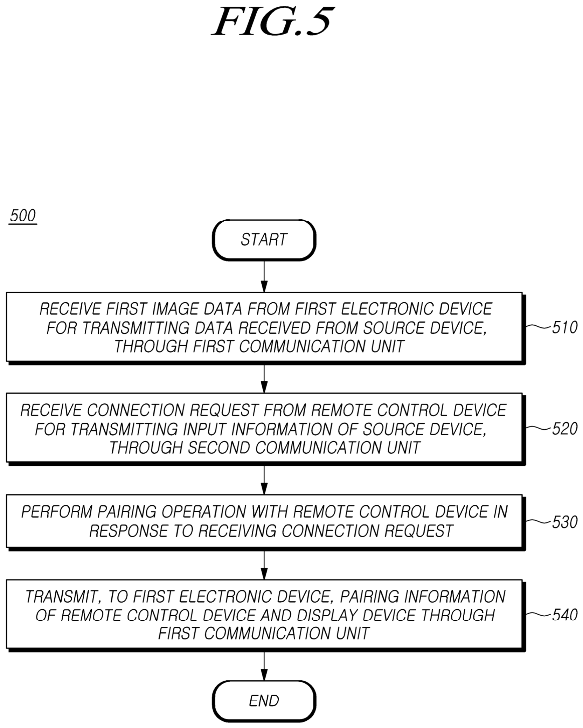

FIG. 5 illustrates an example process 500 of pairing according to various embodiments. The display device of FIG. 5 may include a device corresponding to the electronic device 100 of FIG. 1, the display device 210 of FIG. 2, and the display device 310 of FIGS. 3 and 4. The source device of FIG. 5 may include a device corresponding to the source device 240 of FIG. 2 and the source device 340 of FIGS. 3 and 4. The remote control device of FIG. 5 may include a device corresponding to the remote control device 220 of FIG. 2 and the remote control device 320 of FIGS. 3 and 4. The first electronic device of FIG. 5 may include a device corresponding to the wireless image transmission/reception device 230 of FIG. 2 and the wireless image transmission/reception device 330 of FIGS. 3 and 4. The operation of FIG. 5 may include all the operation contents of the display device according to the first state, the second state, and the third state of FIG. 4.

According to an embodiment, in operation 510, the display device may receive first image data from the first electronic device for transmitting the data received from the source device through the first communication unit.

In an embodiment, the first communication unit may communicate data with the source device using a first short-range wireless communication technology, e.g., Wi-Fi.

In an embodiment, the first electronic device for transmitting data received from the source device may include a wireless image transmission/reception device. In embodiments, the first electronic device may be connected to other devices (e.g., a set-top box, a PC, etc.) capable of providing an input source to the display device as well as the source device.

In an embodiment, the first electronic device may be wiredly connected to the source device. The first electronic device may be connected to the source device through an HDMI cable. For example, the first electronic device may be connected to the source device via HDMI CEC.

In an embodiment, the first electronic device may establish a wireless communication link with the source device. The first electronic device may establish a wireless communication link with the source device using a second short-range wireless communication technology. For example, the first electronic device may perform pairing with the source device via Bluetooth.

In an embodiment, the first image data may include audio/video data generated from the source device. The first image data may include data about software (e.g., a game) being executed on the source device. The first image data may include data generated based on the user input from the remote controller. The first image data may include both video data and audio data.

In an embodiment, the source device may receive data from a server device.

According to an embodiment, in operation 520, the display device may receive a connection request from a remote control device for transmitting input information of the source device through the second communication unit.

In an embodiment, the remote control device may include a device for transmitting information about the user input to the source device. The remote control device may include a remote controller, a smartphone, and a game pad device.

In an embodiment, the remote control device may include objects for identifying the user input. For example, the remote control device may include physical buttons and manipulating elements. For example, the remote control device may include a display. The remote control device may receive the user's touch input through the display.

In an embodiment, the second communication unit may communicate data with the remote control device using the second short-range wireless communication technology, e.g., Bluetooth.

In an embodiment, the remote control device may communicate data with the source device while being connected to the source device, and if the connection between the remote control device and the source device is lost or disconnected (e.g., if the user using the remote control device moves a predetermined distance from the source device and the connection is severed or lost), the remote control device may transmit a connection request to another adjacent IoT device (e.g., a display device). The remote control device may transmit information about the user input to the remote control device to the source device. If the remote control device is connected to the source device, the remote control device may directly transmit information about the user input to the source device. However, if the user of the remote control device moves away from the source device, direct communication between the remote control device and the source device may not be possible. In this case, the remote control device may transmit the information regarding the user input to the source device through the first electronic device (e.g., the wireless image transmission/reception device) and the display device (e.g., a TV) positioned nearby, rather than transmitting the information regarding the user input directly to the source device. To that end, in response to identifying that the connection between the remote control device and the source device is lost, the remote control device may search for a nearby display device or a wireless image transmission/reception device and may send a request for wireless connection to the display device or the wireless image transmission/reception device able to establish connection.

In an embodiment, the display device may monitor a connection request received from an adjacent or another device. If there is a connection request identified during the monitoring process, Bluetooth pairing may be performed with the device that has transmitted the connection request.

In an embodiment, the display device may broadcast an advertising packet every predetermined period. If the advertising packet from the display device is received, the remote control device may transmit a connection request to the display device in response to identifying that the connection with the source device is lost or severed.

In an embodiment, the connection request may include medium access control (MAC) information about the remote control device, identification information about the remote control device, and information for Bluetooth connection of the remote control device.

According to an embodiment, in operation 530, the display device may perform pairing with the remote control device in response to receiving the connection request.

In an embodiment, the display device may perform Bluetooth pairing with the remote control device.

In an embodiment, the display device and the remote control device may perform an authentication procedure.

In an embodiment, when the display device and the remote control device have previously been connected, the authentication procedure may not be performed.

In an embodiment, as a result of performing pairing with the remote control device, the display device may establish a wireless communication link for data communication between the display device and the remote control device. The display device may receive the information regarding the user input and the control signal from the remote control device through the wireless communication link.

According to an embodiment, in operation 540, the display device may transmit pairing information of the display device and the remote control device to the first electronic device through the first communication unit.

In an embodiment, the display device may transmit MAC information and identification information about the remote control device identified in the pairing process with the remote control device performed in operation 530 to the first electronic device.

In an embodiment, although not illustrated, the first electronic device may transmit the received pairing information of the remote control device to the source device. The source device may determine whether to process the data based on the information regarding the user input of the remote control device received from the first electronic device based on the pairing information of the remote control device received from the first electronic device.

In an embodiment, the first electronic device and the display device may be connected to a same network. In an embodiment, the display device may receive data regarding the user input from the remote control device through the second communication unit. In an embodiment, the display device may transmit the data regarding the user input to the first electronic device through the first communication unit.

In an embodiment, the data regarding the user input may be transmitted through a back channel of the display device and the first electronic device.

In an embodiment, the first electronic device may transmit a connection request to the source device. The first electronic device may send a request for Bluetooth connection to the source device.

In an embodiment, if the connection between the first electronic device and the source device is successful, the first electronic device may communicate data with the source device through a wireless communication link.

In an embodiment, if the connection between the first electronic device and the source device fails, the first electronic device may communicate data with the source device wiredly (e.g., HDMI CEC).

In an embodiment, the display device may receive second image data generated based on the data regarding the user input from the first electronic device through the first communication unit. The second image data may include image data generated based on information about the user input transmitted from the remote control device to the source device through the display device and the first electronic device.

In an embodiment, the display device may display a screen unit based on the second image data.

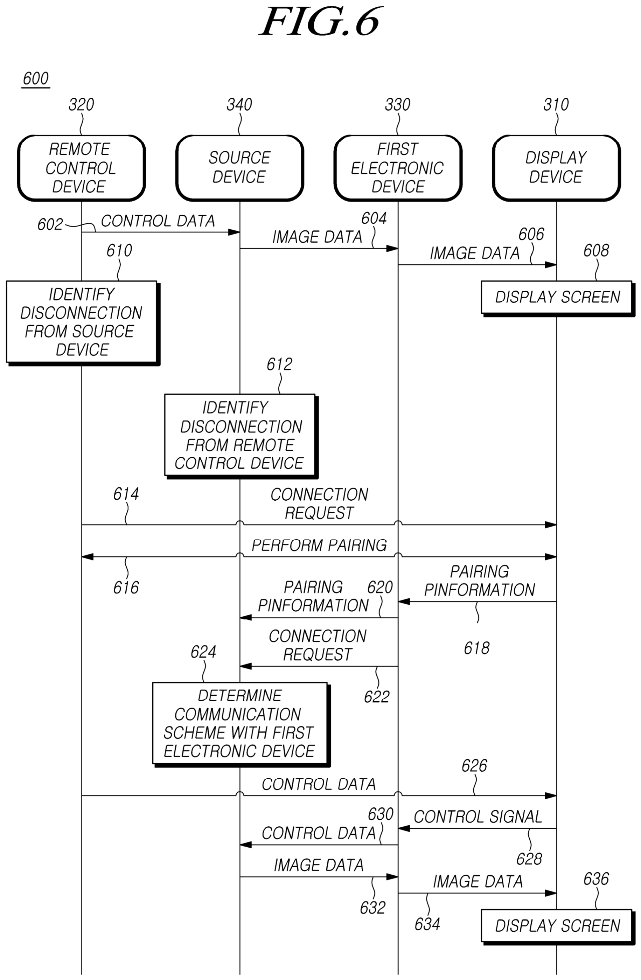

FIG. 6 illustrates an example flow diagram 600 among a remote control device, a source device, a first electronic device, and a display device according to various embodiments.

According to an embodiment, in operation 602, the remote control device 320 may transmit control data to the source device 340. The control data may include information regarding the user input from the remote control device 320.

According to an embodiment, in operation 604, the source device 340 may transmit image data to the first electronic device 330. The image data may include data about an execution screen of software (e.g., a game) executed on the source device 340.

According to an embodiment, in operation 606, the first electronic device 330 may transmit image data to the display device 310.

According to an embodiment, in operation 608, the display device 310 may display a screen. The display device 310 may display a screen based on the image data received from the first electronic device 330.

According to an embodiment, in operation 610, the remote control device 320 may identify that the connection with the remote control device 320 is lost. If the remote control device 320 moves away from the source device 340 beyond (or passed) a predetermined distance or an obstacle is positioned between the remote control device 320 and the source device 340, the connection between the remote control device 320 and the source device 340 may be lost.

According to an embodiment, in operation 612, the source device 340 may identify lost connection from the remote control device 320. Likewise, the source device 340 may identify lost connection from the remote control device 320.

According to an embodiment, in operation 614, the remote control device 320 may include communication and processing circuitry and transmit a connection request to the display device 310. Since the remote control device 320 may not directly transmit the information regarding the user input identified by the remote control device 320 to the source device 340, the remote control device 320 may transmit a connection request to the display device 310 positioned adjacent to (or near) the remote control device 320 to transmit the information regarding the user input to the display device 310. The operation contents according to operation 614 may include all the operation contents corresponding to operation 520.

According to an embodiment, in operation 616, the remote control device 320 and the display device 310 may perform a pairing procedure. In the pairing procedure, the remote control device 320 and the display device 310 may exchange information necessary for Bluetooth pairing or to establish connection. For example, the remote control device 320 may transmit the MAC address of the remote control device 320, identification information about the remote control device 320, and the like to the display device 310.

According to an embodiment, in operation 618, the display device 310 may transmit pairing information to the first electronic device 330. The pairing information may include information regarding pairing between the display device 310 and the remote control device 320 (e.g., identification information regarding the remote control device 320, MAC address, etc.).

According to an embodiment, in operation 620, the first electronic device 330 may transmit pairing information to the source device 340.

According to an embodiment, in operation 622, the first electronic device 330 may transmit a connection request to the source device 340. The connection request may include the signal transmitted from the first electronic device 330 to the source device 340 for Bluetooth connection between the first electronic device 330 and the source device 340.

According to an embodiment, in operation 624, the source device 340 may determine a communication scheme with the first electronic device 330.

In an embodiment, if the connection between the source device 340 and the first electronic device 330 is successful, the source device 340 may communicate with the first electronic device 330 based on Bluetooth technology.

In an embodiment, if the connection between the source device 340 and the first electronic device 330 fails, the source device 340 may perform communication with the first electronic device 330 through a wired line (e.g., HDMI-CEC).

According to an embodiment, in operation 626, the remote control device 320 may transmit control data to the display device 310. The control data may include information regarding the user input identified in the remote control device 320.

According to an embodiment, in operation 628, the display device 310 may transmit a control signal to the first electronic device 330. The control signal may include the information regarding the user input transmitted from the remote control device 320 to the display device 310.

According to an embodiment, in operation 630, the first electronic device 330 may transmit control data to the source device 340. The control data may include the information regarding the user input transmitted from the remote control device 320 to the display device 310.

According to an embodiment, in operation 632, the source device 340 may transmit image data to the first electronic device 330. The image data may include screen display data generated by the source device 340 based on the control data received in operation 630.

According to an embodiment, in operation 634, the first electronic device 330 may transmit image data to the display device 310.

According to an embodiment, in operation 636, the display device 310 may display a screen. The display device 310 may display the screen based on the image data received in operation 634.

A display device according to an embodiment of the disclosure may comprise a first communication unit performing communication based on a first wireless communication technology, a second communication unit performing communication based on a second wireless communication technology, and a processor connected to the first communication unit and the second communication unit. The processor according to an embodiment may receive, through the first communication unit, first image data from a first electronic device for transmitting data received from a source device. The processor according to an embodiment may receive, through the second communication unit, a connection request from a remote control device for transmitting input information of the source device. The processor according to an embodiment may perform pairing with the remote control device in response to receiving the connection request. The processor according to an embodiment may transmit pairing information of the display device and the remote control device to the first electronic device through the first communication unit. In an embodiment, the first electronic device and the display device may be connected to the same network.

The processor according to an embodiment may receive data regarding a user input from the remote control device through the second communication unit. The processor according to an embodiment may transmit the data regarding the user input to the first electronic device through the first communication unit.

The processor according to an embodiment may transmit the data regarding the user input through a back channel of the first electronic device and the display device.

The electronic device according to an embodiment may further comprise a display unit connected to the processor. The processor may receive second image data generated based on the data regarding the user input from the first electronic device through the first communication unit and display a screen based on the second image data.

In an embodiment, the first wireless communication technology may include Wi-Fi, and the second wireless communication technology may include Bluetooth.

In an embodiment, the pairing information of the display device and the remote control device may include a MAC address of the remote control device and identification information about the remote control device.

The processor according to an embodiment may display a user interface for performing pairing with the remote control device in response to receiving the connection request.

The processor according to an embodiment may transmit information regarding a user input to the source device in response to identifying that the source device and the display device are connected to each other.

A method for operating a display device according to an embodiment of the disclosure may comprise receiving, using a first wireless communication technology, first image data from a first electronic device for transmitting data received from a source device. The method for operating the display device according to an embodiment may comprise receiving, using a second wireless communication technology, a connection request from a remote control device for transmitting input information of the source device. The method for operating the display device according to an embodiment may comprise performing pairing with the remote control device in response to receiving the connection request. The method for operating the display device according to an embodiment may comprise transmitting pairing information of the display device and the remote control device to the first electronic device through the first communication unit. In the method for operating the display device according to an embodiment, the first electronic device and the display device may be connected to the same network.

The method for operating the display device according to an embodiment may comprise receiving data regarding a user input from the remote control device using the second wireless communication technology. The method for operating the display device according to an embodiment transmitting the data regarding the user input to the first electronic device using the first wireless communication technology.

The method for operating the display device according to an embodiment may comprise transmitting the data regarding the user input through a back channel of the first electronic device and the display device.

The method for operating the display device according to an embodiment may comprise receiving second image data generated based on the data regarding the user input from the first electronic device using the first wireless communication technology. The method for operating the display device according to an embodiment may comprise displaying a screen based on the second image data.

In an embodiment, the first wireless communication technology may include Wi-Fi, and the second wireless communication technology may include Bluetooth.

In an embodiment, the pairing information of the display device and the remote control device may include a MAC address of the remote control device and identification information about the remote control device.

The method for operating the display device according to an embodiment may comprise displaying a user interface for performing pairing with the remote control device in response to receiving the connection request.

The method for operating the display device according to an embodiment may comprise transmitting information regarding a user input to the source device in response to identifying that the source device and the display device are connected to each other.

A method for operating a remote control device according to an embodiment of the disclosure may comprise performing data communication with a source device using a first short-range wireless communication technology. The method for operating the remote control device according to an embodiment may comprise transmitting a connection request to a display device in response to identifying that connection with the source device is released. The method for operating the remote control device according to an embodiment may comprise forming a wireless communication link with the display device using the first short-range wireless communication technology. The method for operating the remote control device according to an embodiment may comprise transmitting information regarding a user input to the remote control device, to the display device through the wireless communication link.

In an embodiment, the first short-range wireless communication technology may include Bluetooth.

The method for operating the remote control device according to an embodiment may comprise transmitting the connection request to the display device in response to receiving an advertising packet from the display device.

The method for operating the remote control device according to an embodiment may comprise transmitting the connection request to the source device in response to identifying that connection with the display device is lost.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the server device described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A display device, comprising:
a first communication unit performing communication based on a first wireless communication technology;
a second communication unit performing communication based on a second wireless communication technology; and
a processor connected to the first communication unit and the second communication unit, wherein the processor is configured to:
receive, from a first electronic device for transmitting data received from a source device, through the first communication unit, first image data;
receive, from a remote control device for transmitting input information of the source device, through the second communication unit, a connection request;
in response to receiving the connection request, perform pairing operation of the display device with the remote control device, and
transmit pairing information of the display device and the remote control device to the first electronic device through the first communication unit,
wherein the first electronic device and the display device are connected to a same network.

2. The display device of claim 1, wherein the processor is configured to:
receive, from the remote control device through the second communication unit, data regarding a user input; and
transmit, to the first electronic device through the first communication unit, the data regarding the user input.

3. The display device of claim 2, wherein the processor is configured to transmit the data regarding the user input through a back channel of the first electronic device and a back channel of the display device.

4. The display device of claim 2, further comprising a display connected to the processor, wherein the processor is configured to:
receive, from the first electronic device through the first communication unit, second image data generated based on the data regarding the user input; and
display a screen based on the second image data.

5. The display device of claim 1, wherein the first wireless communication technology comprises Wi-Fi, and the second wireless communication technology comprises Bluetooth.

6. The display device of claim 3, wherein the pairing information comprises a medium access control (MAC) address of the remote control device and identification information about the remote control device.

7. The display device of claim 1, wherein the processor is configured to display a user interface for performing pairing of the display device with the remote control device in response to receiving the connection request.

8. The display device of claim 1, wherein the processor is further configured to, in response to identifying that the source device and the display device are connected to each other, transmit information regarding a user input to the source device.

9. A method for operating a display device, the method comprising:
receiving, from a first electronic device for transmitting data received from a source device, using a first wireless communication technology, first image data ;
receiving, from a remote control device for transmitting input information of the source device, using a second wireless communication technology, a connection request ;
performing pairing of the display device with the remote control device in response to receiving the connection request; and
transmitting, to the first electronic device using the first wireless communication technology, pairing information of the display device and the remote control device,
wherein the first electronic device and the display device are connected to a same network.

10. The method of claim 9, further comprising:
receiving, from the remote control device using the second wireless communication technology, data regarding a user input; and
transmitting, to the first electronic device using the first wireless communication technology, the data regarding the user input.

11. The method of claim 10, further comprising transmitting the data regarding the user input through a back channel of the first electronic device and a back channel of the display device.

12. The method of claim 10, further comprising:
receiving, from the first electronic device using the first wireless communication technology, second image data generated based on the data regarding the user input; and
displaying a screen based on the second image data.

13. A method for operating a remote control device, the method comprising:
performing data communication with a source device using a first short-range wireless communication technology;
transmitting a connection request to a display device in response to identifying that connection of the remote control device with the source device is released;
forming a wireless communication link between the remote control device and the display device using the first short-range wireless communication technology; and
transmitting, to the display device through the wireless communication link, information regarding a user input to the remote control device.

14. The method of claim 13, wherein the first short-range wireless communication technology comprises Bluetooth.

15. The method of claim 13, further comprising transmitting the connection request to the display device in response to receiving an advertising packet from the display device.
